# EUROPEAN PATENT APPLICATION

(11) **EP 2 846 113 A1**
(43) Date of publication of application: **11.03.2015**
(21) Application number: 13784630.9
(22) Date of filing: 15.04.2013
(51) Int. Cl.: F25B 41/00, F25B 49/00, F28D 1/06, F28D 7/00

(54) **COOLING/RECOVERING SYSTEM FOR THE COOLING OF FACILITIES**

(30) Priority: 30.04.2012 ES 201230644
(71) Applicant: Atecan Andalucia SL, 29001 Malaga (ES)
(72) Inventor: GUTIERREZ MURIANO, Jessica, E-29001 Malaga (ES)
(74) Representative: Carvajal y Urquijo, Isabel
(86) International application number: PCT/ES2013/070236
(87) International publication number: WO 2013/164506

(57) **Abstract**

The invention relates to a system that is functionally associated with a refrigeration unit (1), said system comprising a primary tank (6) for the inflow of the water to be treated, and an inner tank (7) for cooling and mixing the water. Said tank (7) contains an exchanger (13) through which the liquid gas from the refrigeration unit (1) is passed, at the same time as the water entering the primary tank (6) accesses the cooling and mixing tank (7) from the primary tank, said cooling and mixing tank comprising water suction tubes (23) that converge in a three-way valve (25) connected to a water recirculation pump (15) via which the water is driven inside the exchanger (13). The treated water leaves via an outflow line (27).

## Description

### Object of the invention

The present invention relates to a cooling/recovering system for the cooling of facilities, specifically, for hospitals and other places where there is a need for healthcare sanitization in order to prevent and control legionellosis.

The object of the invention is to achieve a high return in relation to the energy consumption required for this type of system as well as a maximum output during its functioning and the possibility to install it without the need to deactivate the corresponding refrigeration unit.

### Background of the invention

As is known, the refrigeration towers are used for healthcare sanitization in order to prevent and control legionellosis such that the refrigeration towers represent a focus for contagion of the feared legionella without disregarding other damage caused to the environment, such that only by means of a complete program of maintenance with significant costs, such damages are avoided, with the problems intensifying if vigilance is reduced in said programs.

In any case, the sanitization programs are based on a hygienic/sanitary protocol for preventing and controlling legionellosis comprising basic actuations, clinical analyses and periodic cleaning using chemical products which in one way or another impact the environment, or are projected in microparticles together with colonies of bacteria and other microbes through the cooling fans or discharged together with the excess water.

As a consequence of the evaporation, the concentration of dissolved salts in circulating water increases progressively during the functioning of the tower, producing alkaline or acidic chemical compounds which cause incrustations and corrosion of the facilities, shortening the service life of the same.

Taking into account that water is a scarce and expensive commodity, elevated consumption of the same, with a constant temperature of the water used for condensation, causes, during the use of refrigeration towers, an irregular functioning of the latter, as well as high consumption which is prejudicial for the latter; thus if what was previously said was added to this, these refrigeration systems or towers become dangerous, expensive and largely unproductive.

### Description of the invention

The cooling/recovering system for the cooling of facilities which is envisaged, has been conceived to resolve the previously expressed problem in such a way that the same forms, together with the refrigeration unit, a single system or assembly provided for substituting the classic refrigeration towers, achieving in one single assembly both a saving of water, at a constant working temperature as well as a better use of energy and absolute environmental safety.

More specifically, the refrigeration/cooling system, according to the invention, is provided to be associated with a conventional refrigeration unit, the system per se comprising said two tanks, one designated the primary tank which the water to be treated directly accesses and another designated as a cooling and mixing tank for the water from both the general piping previously mentioned or from the inflow in the primary tank, such as that which is achieved by means of supplying a liquid gas from the refrigeration unit.

The primary tank is annular and has an inflow of water from piping where a temperature thermometer for the water and a flowmeter for measuring the flow rate have been provided as well as a manometer and a temperature control probe.

This primary tank has, in proximity to its upper part, an outflow of water to the cooling and mixing tank, a tank which is situated concentrically to the former tank and includes an exchanger, through which liquid gas from the refrigeration unit is made to flow, also including a water inflow line to the exchanger and a coolant gas outflow line implemented in said exchanger, this cooling and mixing tank also including suction tubes, one upper and one lower, for the water, tubes which converge externally in a three-way valve, connected to a circulation pump by way of which the water suctioned is driven from the cooling and mixing tank and made to pass through the exchanger, exiting the latter in the form of liquid gas to be resent once again to the refrigeration unit.

Inside the mentioned cooling and mixing tank there exists in the lower part a tube for the outflow of treated water as well as an outflow of water which passes through the exchanger.

A water condensation circulation line has also been provided between the outflow for treated water and the inflow for water to be treated, all of which is complemented by valves, manometers, thermometers and other control means for the correct functioning of the system.

The materials used in the system are based on galvanized steel treated with polyester powder and dried at a high temperature, having an exterior structure based on removable panels isolated with noise reducing sheets.

Viscoelastic, flexible materials having an elevated weight and high loss factor are also used, on the one hand cushioning the vibration plates and reducing their sound radiation and on the other hand increasing the sound isolation with light constructions.

The exchanger is constituted based on soldered plates and the cooling unit is made of copper mechanically expanded into aluminum fins, having a design suited to taking advantage of the greatest exposed surface, facilitating its cleaning and maintenance, duly protected against external damage.

In terms of the fans of said refrigeration unit, they are axial fans with a rotary or centrifugal extractor, according to capacity.

Numerous advantages are derived from the cooling/recovering system which is the object of the invention, the most significant of which can be cited as follows:
- It can be installed without the need to deactivate the existing refrigeration unit, only very few hours being required to incorporate or install the system.
- The materials of the old facility are recyclable, after checking the state of the same.
- The functioning is in accordance with a closed circuit of water, without chemical products or sanitization protocols or by assumed control or specialized laboratory analysis.
- It does not produce microparticle evaporations or projections, avoiding all risk of contagion, with the result that the emissions are completely zero.
- It does not require the water to be replaced, which results in a significant saving.
- It does not produce residues which may cause corrosions or reduce the service life of the assembly.
- Higher return with respect to energy consumption, to using water at a lower temperature, which achieves a greater output in the functioning of the different components, lengthening the service life, with less work and greater durability.

### Description of the drawings

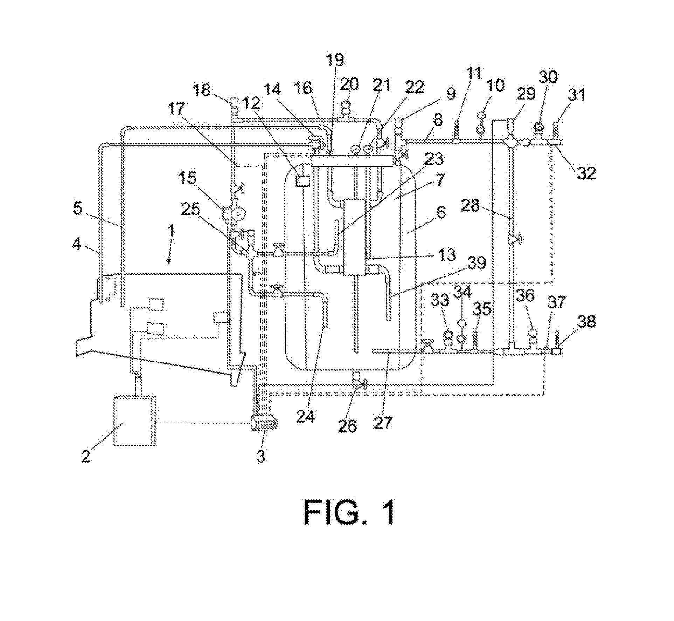

In order to complement the description which is going to be given below and with the aim of aiding a better understanding of the characteristics of the invention, in accordance with a preferred practical exemplary embodiment of the same, one single drawing accompanies as an integral part of said description, wherein the following is represented in an illustrative and non-limiting manner:
The single figure shown on the drawing sheet referred to corresponds to a schematic representation of the cooling/recovering system associated with a refrigeration unit, all of which is implemented in accordance with the object of the invention.

### Preferred embodiment of the invention

As may be seen in the figure referred to, the cooling/recovering system of the invention is provided to be associated with a refrigeration unit (1) associated with the respective electric circuit (2) and an exchange (3) of three-way valves.

In this refrigeration unit (1), the outflow line (4) for the liquid gas and the return line (5) converge.

In terms of the cooling/recovering system per se, the same comprises a primary tank (6) which is annular and in the interior of which is established a secondary tank (7) as a cooling and mixing tank, in such a way that water to be treated accesses the primary tank (6) by way of the line (8), preventing an air vent (9) at the inflow, having the particularity that in this line (8) there is provided a thermometer (10) and a flowmeter (11) for the inflow water.

The water to be treated which accesses the primary tank (6) circulates according to the direction indicated by the arrows, until reaching an outflow (12) situated in proximity to the upper part of the same, by way of which the water accesses the cooling and mixing tank (7), the latter including in its interior an exchanger (13) through which the liquid gas from the refrigeration system (1) is made to pass, by way of the line (4) in which an expansion valve (14) is provided, at the inflow of the tank (7), such that this liquid gas passes through the exchanger (13) and exits through the outflow (39) provided in proximity to the lower part of the tank (7).

At the same time, the water is made to pass through said exchanger (13) by means of driving force from a recirculation pump (15), accessing the exchanger (13) by way of the line (16) to pass through the exchanger (13) and exit through the return line (5) already mentioned. In the line where the recirculation pump (15) is situated, a temperature probe (17) for the water and an air vent (18) are provided, while in the outflow return line (5) of the exchanger (13), a probe (19) is provided which measures the temperature of the coolant gas obtained on its passing through the exchanger (13).

On the other hand, and in the inflow line (16) to the exchanger (13) per se, a control thermometer (20) for the temperature is incorporated, while the cooling and mixing tank (7) is provided with a thermometer (21) for measuring the temperature in the lower part of the tank (7) and a thermometer (22) for measuring the temperature in the intermediate part of the same tank (7).

A line (23) for extracting the water is also provided corresponding to the upper part of the tank (7) and another line (24) for extracting the water from the same tank (7) from the lower part of the same such that both lines (23 and 24), at the outflow of the tank (7), interconnect by way of a three-way valve (25) connected to the recirculation pump (15). In the lower part of the tank, there is provided a vacuum drain (26) as well an outflow line (27) for the treated water. Furthermore, a circulation line (28) for condensed water is incorporated by way of which the excess water required for cooling is supplied, said water inflow being regulated by a three-way valve (29) in the intersection between the inflow line (8) and the recirculation line (28) such that upstream of this interconnection or three-way valve (29) there is provided a pressure manometer (30) and a water flowmeter (31) as well as a temperature control probe (32). In the outflow line (27), there is provided a water pressure manometer (33), a temperature control thermometer (34) and a flowmeter (35), all of which to control the water treated on its outflow from the tank (7), with the particularity that at the outflow of the intersection between this outflow line (27) of the treated water and the recirculation line (28) of the condensation water, a thermometer (36), a temperature probe (37) and a flowmeter (38) are incorporated.

By means of the cooling/recovering system described combined with the refrigeration unit (1), the advantages mentioned are achieved, such that by way of example, it may be said that if a refrigeration tower functioning in a facility with a 252 KW capacity supplying 216,968 freezers is changed, the system substituted and implemented according to the invention would have a 84.1 KW potential with an equivalent of 72,326 freezers, which logically translates into a considerable energy saving, having the same output with a consumption three times less than the original refrigeration facility or tower.

Said cooling/recovering system may also be used for supplanting a water/water cooler, using, to this end, a system with a potential 30% less than the supplanted system.

## Claims

1. Cooling/recovering system for the cooling of facilities such as hospitals and other places where there is a need for healthcare sanitization in order to prevent and control legionellosis and wherein the system per se is associated with a condensation refrigeration unit (1) for condensation, **characterized in that** it comprises two independent tanks, one a primary tank (6) for water to be condensed and the other a cooling and mixing tank (7) for water coming from the primary tank (6) and from the water condensation obtained as liquid gas passes through an exchanger (13) provided in said cooling and mixing tank (6); a recirculation pump (15) being provided to drive the water by way of the exchanger (13), as well as an expansion valve (14) arranged at the inflow of the liquid gas in the exchanger (13) and coming from the condensation refrigeration unit (1), the latter being a receptacle in turn for gas vapor obtained in the exchanger (13) as gas passes through the same.

2. Cooling/recovering system for the cooling of facilities according to Claim 1, **characterized in that** the primary tank (6) is annular and has, in an upper area of the same, a water outflow (12) to the cooling and mixing tank (7) as well as a lower vacuum drain (26); with the particularity that in the water line (8) accessing said primary tank (6), there is incorporated a control thermometer (1) for the inflow temperature, a flowmeter (11) for measuring the flow rate and an air vent (9).

3. Cooling/recovering system for the cooling of facilities according to any one of the preceding claims, **characterized in that** the cooling and mixing tank (7) is arranged in the interior of the primary tank (6) and in addition to the exchanger (13), includes the inflow of water coming from the primary tank (6) which corresponds to the outflow (12) of this primary tank, also comprising an expansion valve (14) in the inflow line (4) of liquid gas coming from the refrigeration unit (1); also being provided an outflow (39) for the water from the exchanger (13), a control thermometer (21) for the temperature in the lower part of the cooling and mixing tank (13), a temperature control thermometer (22) in the intermediate area of said cooling and mixing tank (7) as well as a water suction line (23) in the upper part and a water suction line (24) in the lower part, lastly including, in the lower part, an outflow line (27) for the treated water; also being provided in addition to the outflow line (27), it includes a pressure manometer (33), a thermometer (34) and a flowmeter (35) for the treated water.

4. Cooling/recovering system for the cooling of facilities according to claim 3, **characterized in that** the upper (23) and lower (24) suction lines of the cooling and mixing tank (7) converge externally in a three-way valve (25) connected to the recirculation pump (15).

5. Cooling/recovering system for the cooling of facilities according to any one of the preceding claims, **characterized in that** between the inflow line (8) of the water to the primary tank (6) and the outflow line (27) of treated water in the cooling and mixing tank (7), there is provided a circulation line (28) of condensed water for the required supply of condensation water for its cooling, said water circulation being regulated by a three-way valve (29) provided in the intersection between such circulation line (28) and the general access line (8) of water to the primary tank (6).

6. Cooling/recovering system for the cooling of facilities according to any one of the preceding claims, **characterized in that** both in the general inflow line (8) and in the general outflow line (27), upstream and downstream of the circulation line (28), there is provided a pressure manometer (30), a water flowmeter (31) and a temperature control probe (32) for the inflow of water, while the treated water in the line (27) is controlled by means of a thermometer (36), a temperature probe (37 and a flowmeter (38).
